Europäisches Patentamt

European Patent Office

Office européen des brevets

(11) Publication number: **0 308 173**
A1

## (12) EUROPEAN PATENT APPLICATION

(21) Application number: 88308446.9

(22) Date of filing: 13.09.88

(51) Int. Cl.⁴: **F 16 D 41/06**
F 16 D 41/18

(30) Priority: 18.09.87 GB 8722001

(43) Date of publication of application:
22.03.89 Bulletin 89/12

(84) Designated Contracting States: DE ES FR GB IT

(71) Applicant: THE WELLMAN BIBBY COMPANY LIMITED
No. 1 Unit Staines Central Trading Estate
Staines Middlesex TW18 4UP (GB)

(72) Inventor: Warland, Christopher Robert
58, The Warren
Heston Middlesex, TW5 0JN (GB)

Crockford, Victor
10, Harvest Hill Road
Maidenhead Berkshire, SL6 2QQ (GB)

(74) Representative: Valentine, Francis Anthony Brinsley et al
REDDIE & GROSE 16 Theobalds Road
London WC1X 8PL (GB)

(54) Anti-reversal device.

(57) A device for preventing counter rotation between two members (10,35) has concentric main rings of teeth (16,20); load pins (27) movably located between the rings of teeth; a control ring (31) with slots (26) engaging the loading pins in such a way that initial rotation between the control ring (31) and one of the members will cause the load pins to be driven between an operative position interposed between the rings of main teeth and an inoperative position clear of one of the rings of teeth, and index pins (28); movably located between auxiliary rings of teeth (32) fast with the member (35) and on the control ring (31). To prevent canting of the load pins (27) the concentric main rings of teeth are duplicated and lie on either side of the control ring (31).

FIG.1

**Description**

ANTI-REVERSAL DEVICE

The present invention relates to anti-reversal devices for preventing counter rotation of wheels or driving shafts. It is particularly relevant for use in machinery such as conveyors where counter rotation due to gravitational run back could cause load spillage, equipment damage and injury.

Known anti-reversal devices have used ratchet and pawl mechanisms which allow rotation in one sense but not in the other. Such a device is not altogether suitable where heavy loads are involved as the engagement of ratchet and pawl causes sudden cessation of rotation and puts a severe strain on the system. If the pawl should fail to engage at first, the increase in momentum of counter-rotation may be too great for the assembly to withstand.

European Patent No. 0013913 discloses an alternative device for preventing counter rotation. This comprises a device for preventing counter rotation between two members having concentric main rings of teeth; main locking elements movably located between the rings; a control element engaging the main locking elements in such a way that initial rotation between the control element and one of said members will cause the main locking elements to be driven between an operative position interposed between the rings of main teeth and an inoperative position clear of one of the rings; auxiliary locking elements movably located between auxiliary rings of teeth on one of the members and on the control element; arrest or rotation of the control element relative to said one member causing the movement of the auxiliary locking elements to a position interposed between the auxiliary rings of teeth; counter rotation of the other member relative to the control element leading the main locking elements to assume their operative position.

An anti-reversal device according to the present invention is characterised in that either the control element or said concentric main rings of teeth are duplicated, the duplicated control elements or rings of teeth lying on either side of either the concentric main ring of teeth or of the control element respectively.

Such a device prevents canting of the main locking elements as the device comes into operation. Canting could cause the ends of the locking elements to engage with stationary parts of the device while the locking elements are travelling with one of the members. This could progressively wear down the control elements requiring replacement of these parts.

Advantageously, the control element and rings of teeth may be designed so that they are reversible with respect to the axis of rotation of the rings and to the locking elements. Use of such reversible members means that it is possible to use the same parts to construct either a clockwise or an anti-clockwise backstop. Indeed a backstop of one hand could be reassembled to give a backstop of the other hand by reversing the parts which impart the handedness namely the control element and rings of teeth.

An embodiment of the invention will now be described by example with reference to the accompanying drawings, in which:-
FIGURE 1 is a cross sectional view of a device according to the invention.
FIGURE 2 is a partial end view of a wheel ring as shown in Fig.1.
FIGURE 3 is a partial end view of a stop ring as shown in Fig.1.
FIGURE 4 is a partial end view of the supplementary ring as shown in Fig.1.

The anti-reversal device shown in the drawings is one suitable for use with conveyor belts and comprises an annular head member 10 keyed to a drive shaft 33, with a central axis 11. The annular member 10 surrounds a stop member 12 secured by bolts 13 to a flange 14 which can be frictionally clamped to a stationary clamp ring F.

In the present embodiment, the flange 14 is positioned between an adaptor plate 35 with an associated annular bearing 34 and a clamp ring 37 with an associated brake lining 36. During operation of the drive shaft, the clamp ring 37 is secured tightly to the adaptor plate 35 by screws 38, thus holding the flange 14 immobile with respect to both. When the drive shaft 33 stops and the anti-reverse mechanism has locked, the conveyor will be under tension. This tension may be relieved by gradual slackening of the screws 38. This permits the locked annular and stop members 10 and 12 to rotate slowly together with respect to the clamp ring 37 and adaptor plate 35 thus allowing the stored energy to be dissipated under control. Before rotation the conveyor the screws 38 are retightened.

The annular member 10 is rotatable with the shaft relative to the stop member 12 and flange 14 in one sense (arrow B) but not in the other sense (arrow A).

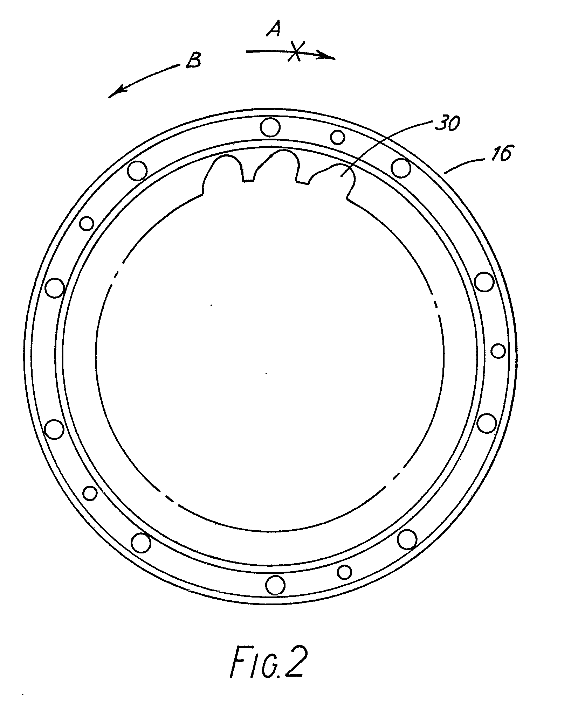

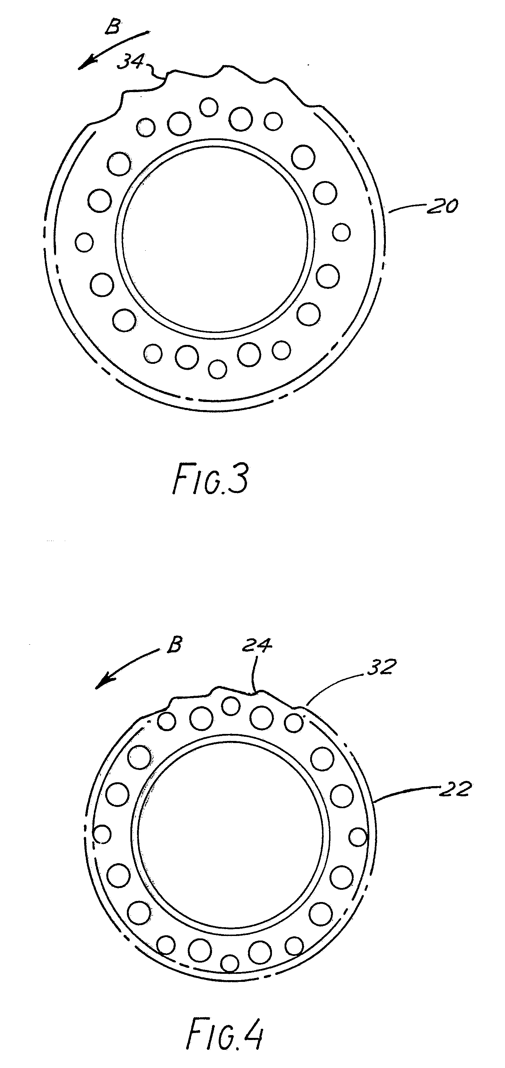

The annular member 10 has two axially spaced coaxial wheel rings 16 of teeth (Fig. 2), these being a first ring 16a and a second ring 16b. The stop member 12 has two similarly coaxial stop rings (Fig.3) 20, these being a first ring 20a and a second ring 20b. These rings 20a, 20b are concentric with the first and second rings respectively, of the annular member 10 though of less radii. The first rings are those closest to the end of the drive shaft. The teeth 18 of each outer ring 16, that is of the rings of the annular member 10, present a sharp profile with relatively deep recesses 30 between each tooth.

The teeth of the inner rings 20 are saw-tooth shaped with steeper sides 34 facing the direction B of permitted rotation. Between the two pairs of concentric rings of teeth 16a, 20a and 16b, 20b is a control ring 31 coaxial with the rings and freely rotatable about the axis 11 with respect to the annular member 10.

The control ring 31 surrounds a supplementary ring 22 (see Fig.4) of saw-tooth shaped teeth 32 which forms part of the stop member. The steeper sides 24 of these teeth 32 being in the same circumferential direction as the steeper sides of the teeth of the main rings 20 of the stop member 12. The inner periphery of the control ring is formed with recesses 23 equal in number and angular spacing to those of the supplementary ring 22. Each recess 23 is bounded on one side by a radial abutment surface and a ramp surface tapering up to the head of the next tooth.

The control ring 31 is in addition provided with a ring of elongate slots 26 sloping outwards, oblique to the radial, in the direction of permitted rotation B. These slots correspond in number and angular separation to teeth 16a, 16b of the outer rings 16. Load pins 27 protrude through and beyond each of these slots 26, each pin 27 continuing so as to also lie between the pairs of coaxial rings of teeth 16a, 20a and 16b, 20b flanking the control ring 31. Index pins 28, of shorter length than the load pins 27 are accommodated between the control ring 31 and the supplementary ring 22 of teeth 32 on the stop member 12. They do not contact any of the concentric rings of teeth, 16,20.

When the drive shaft 33 and annular member 10 are rotating in the permitted direction, the load pins 27 are carried outwards, partly by centrifugal effect but mainly because they are so guided by the control element slots 26, into the recesses between teeth in the outer rings 16. Initially the load pins 27 ride over teeth of the inner rings 20, by means of the less steep sides of the teeth, until they are drawn out of contact to spin freely. Such rotation of the load pins 27 requires a corresponding rotation of the control ring 31 through which the pins pass. The control ring while stationary is linked with the supplementary ring 22 by the index pins 28. Rotation in the permitted direction B is possible because the index pins 28 can ride over the teeth of the supplementary ring 22 in a similar way to the load pins 27 until they are likewise carried out of contact with the stop member 12 by centrifugal force. Thus the control element is able to rotate freely. Since the control element 31 tends to lag behind the rings 16 of the annular member, the oblique slots 26 on the control ring 31 positively drive the load pins 27 out into the recesses 30 in the outer rings 16.

When the drive shaft 10 stops, the index pins 27 catch between the steeper sides of the teeth 32 of the supplementary ring 22 and the recesses 23 around the inner periphery of the control ring 31, thus causing the control ring to stop rotating. A slight counter rotation of the drive shaft 33 and hence of the annular member 10 and its outer rings 16 causes the load pins 27 to be driven down the angled slots 26 of the control ring to engage the ramps on the stop rings 20 of the stop member 12. The load pins 27 thus prevent counter rotation between the annular 10 and stop members 12.

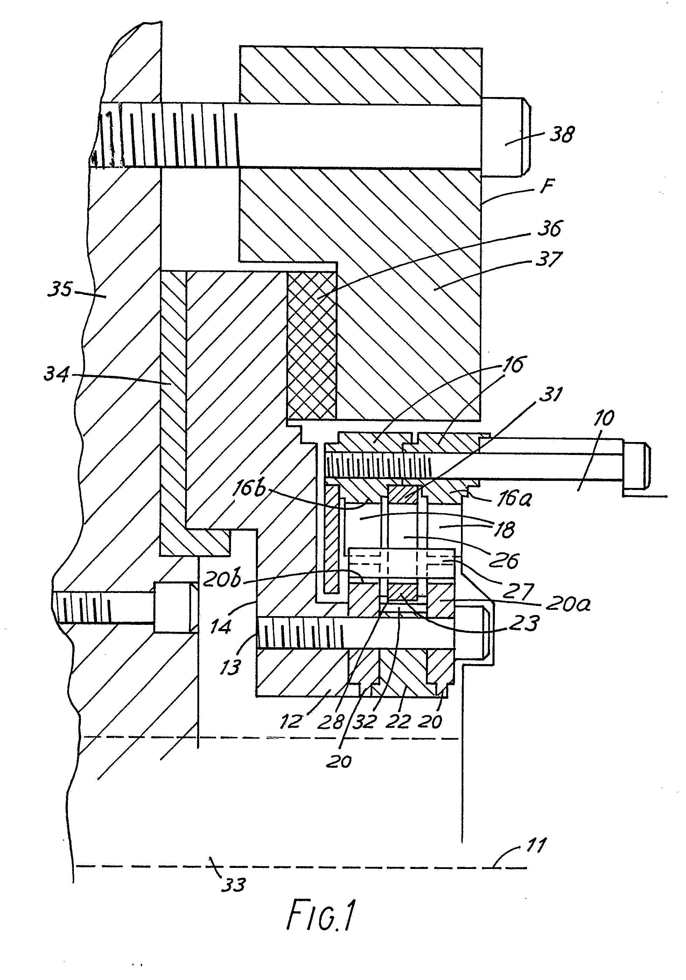

A further feature of the invention is that the same parts can be used to produce either a clockwise counter rotation device or an anti-clockwise device. This may be illustrated as follows with reference to Figure 1. To reverse the device, the device should be partially disassembled, including the removal of the two stop rings 20a, 20b and the supplementary ring 22 from the flange 14. The two wheel rings 16a, 16b should also be removed from the annular head member 10. The control ring 31 and the above parts should then be placed back into position but with each reversed with respect to the flange 14 and to the assembled position of the annular head member 10. The rest of the device should be reassembled as before. The resulting device will allow free rotation only in the opposite sense to the original device.

## Claims

1. A device for preventing counter rotation between two members having concentric main rings of teeth; main locking elements movably located between the rings; a control element engaging the main locking elements in such a way that initial rotation between the control element and one of said members will cause the main locking elements to be driven between an operative position interposed between the rings of main teeth and an inoperative position clear of one of the rings; auxiliary locking elements movably located between auxiliary rings of teeth on one of the members and on the control element; arrest or rotation of the control element relative to said one member causing the movement of the auxiliary locking elements to a position interposed between the auxiliary rings of teeth; counter rotation of the other member relative to the control element leading the main locking elements to assume their operative position;
characterised in that either the control element or said concentric main rings of teeth are duplicated, the duplicated control elements or rings of teeth lying on either side of either the concentric main ring of teeth or of the control element respectively.

2. A device according to claim 1 in which the concentric main rings of teeth are duplicated to form a pair of main rings on each side of the control element.

3. A device according to claim 2 in which the control element is a ring and the main locking elements are pins, each pin extending between the concentric main rings and passing through a respective slot provided in the control element.

4. A device according to claim 3 in which the slots are orientated obliquely to radii of the ring, so that when in use rotation of the control element in one sense causes the pins to be driven towards the outer perimeter of the control ring.

5. A device according to any of claims 1 to 4 in which the radially inner of the concentric main rings of teeth are of ratchet-like form and the teeth of the outer concentric rings are elongate and orientated obliquely with respect to the radial of the rings and in a reverse sense to those of the control ring, the teeth being sufficiently long to permit sufficient accommodation of the control elements between them to allow disengagement of the pins with the ratchet teeth of the radially inner rings.

6. A device acording to any previous claim in which the one member is secured to a rotating shaft and the other member is connected to a releasing torque mechanism allowing controlled rotation of the members.

7. A device according to any preceding claim in which the same constituent parts may be reassembled to give a device for preventing counter rotation in the opposite sense.

8. A device for preventing counter rotation between two members substantially as hereinbefore described with reference to the drawings.

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 232 090 (ANDERSON) * Whole document * | 1,5-7 | F 16 D 41/06 |
| Y | | 2-4 | F 16 D 41/18 |
| Y | GB-A- 153 529 (STROSK) * Whole document * | 2,3 | |
| D,Y | EP-A-0 013 913 (DUNLOP) * Whole document * | 4 | |
| A | | 5,6 | |
| X | US-A-4 275 805 (CRANKSHAW) * Whole document * | 1,5,6 | |
| Y | | 2-4 | |
| Y | FR-A-2 566 493 (PARIS ET RHONE) * Whole document * | 2-4 | |
| A | FR-A-1 158 658 (CENTRI) * Whole document * | 2,3 | |

TECHNICAL FIELDS SEARCHED (Int. Cl.4)

F 16 D 41/00
F 16 D 15/00

The present search report has been drawn up for all claims

| Place of search | Date of completion of the search | Examiner |
|---|---|---|
| THE HAGUE | 06-12-1988 | BALDWIN D.R. |